# EUROPEAN PATENT APPLICATION

(11) **EP 4 312 015 A1**
(43) Date of publication of application: **31.01.2024**
(21) Application number: 22186807.8
(22) Date of filing: 25.07.2022
(51) Int. Cl.: G01N 15/02

(54) **PARTICLE CHARACTERISATION**

(71) Applicant: Malvern Panalytical Limited, Malvern, Worcestershire WR14 1XZ (GB)
(72) Inventor: ISLAM, Mohammed Monjurul, Malvern, WR14 1XZ (GB); ROSS, Amy, Malvern, WR14 1XZ (GB); BRITTAIN, Rory, Malvern, WR14 1XZ (GB)
(74) Representative: Barker Brettell LLP

(57) **Abstract**

A method of automatically selecting an optimal value or range for at least one measurement parameter for particle characterisation by laser diffraction is disclosed. The method comprises receiving a plurality of measurements and associated measurement parameters, wherein the measurements are performed on at least one particulate sample by using laser diffraction to determine at least one particle characteristic, and wherein the plurality of measurements were obtained using a plurality of values for the at least one measurement parameter. The method further comprises using a processor to automatically select, based on the at least one particle characteristic and the associated measurement parameters, an optimal value or range of at least one measurement parameter for performing particle characterisation by laser diffraction.

## Description

### FIELD OF THE INVENTION

The invention relates to a method and apparatus for particle characterisation.

### BACKGROUND

Laser diffraction particle characterisation is a technique for characterising particles. In laser diffraction particle characterisation, a light beam (which may come from an LED or laser diode) is incident on a sample comprising particles suspended in a fluid diluent. The particles scatter the light beam to produce scattered light. The pattern of scattered light (i.e. the distribution of intensity of scattered light at different scattering angles with respect to the incident light beam) is characteristic of certain properties of the particles. For example, particle size or size distribution can be inferred from the pattern of scattered light by detecting the intensity of light scattered at a plurality of different scattering angles.

It is not always straightforward to determine particle size by laser diffraction. There are many potential sources of error. It has hitherto been challenging for a non-expert user of a laser diffraction instrument to develop an appropriate measurement methodology that minimises potential errors in the measurement. It is an object of this invention to ameliorate this problem by at least partially automating aspects of method development for particle characterisation by laser diffraction.

### SUMMARY

According to an aspect of the invention, there is provided a method of automatically selecting an optimal value or range for at least one measurement parameter for particle characterisation by laser diffraction, comprising:
receiving a plurality of measurements and associated measurement parameters, wherein the measurements are performed on at least one particulate sample by using laser diffraction to determine at least one particle characteristic, wherein the plurality of measurements were obtained using a plurality of values for the at least one measurement parameter;
using a processor to automatically select, based on the at least one particle characteristic and the associated measurement parameters, an optimal range of at least one sample preparation parameter and/or measurement parameter for performing particle characterisation by laser diffraction.

The measurement parameters may comprise sample preparation parameters, and/or settings for a laser diffraction instrument (configured to perform laser diffraction analysis on the sample).

The at least one particle characteristic may comprise a particle size (e.g. Dv10, Dv50, Dv90 or some other measurement of particle size).

Each of the measurements may have been performed on successive aliquots taken from the same sample, or on a sample of the same type. For example, a sample may be of the same type if it is obtained from a particular product or product type, or from a particular environment (such as, but not limited to, a manufacturing environment). A particulate sample may comprise a plurality of particles. The particulate sample may comprise a diluent liquid or may be dry.

The method may further comprise performing the measurements by illuminating the sample with a light beam from a light source, thereby generating scattered light from the interaction of the light beam with particles of the sample; detecting the distribution of the scattered light intensity over a range of different scattering angles; using a processor to determine a particle characteristic from the distribution of the scattered light intensity over the range of different scattering angles.

Automatically selecting an optimal value or range of at the least one measurement parameter may comprise identifying a value or range of a measurement parameter that results in a stable particle characteristic.

The method may comprise comprising binning the measurements into a plurality of measurement parameter bins corresponding with different values of a measurement parameter, determining a gradient or variance between the at least one particle characteristics of each measurement parameter bin, and selecting a range of optimal values of a measurement parameter based on the gradient or variance of each measurement parameter bin.

Binning the measurements may comprise using a clustering algorithm.

Selecting a value or range of optimal values of a measurement parameter may comprise:
identifying a measurement parameter bin with minimum gradient or variance;
identifying measurement parameter bins that have a gradient or variance below a threshold defined as a multiple of the minimum gradient or variance.

The at least one measurement parameter may comprise obscuration of the light beam by the sample and the method may comprise selecting an optimal range of obscuration of the light beam by the sample, and the plurality of measurements may comprise measurements performed with different obscuration values of the light beam by the sample.

The method may comprise identifying a range of obscuration that results in low variance in the at least one particle characteristic.

The at least one measurement parameter may be selected from: obscuration, agitation amount, stirrer speed, sonication intensity, sonication duration, feed rate, hopper gap, gas dispersant pressure, measurement time (for example a measurement time during each of illumination by a red light and illumination by a blue light), and sample mass.

The at least one particle characteristic may comprise a particle size and the at least one measurement parameter comprises obscuration; and the method may comprise constraining an optimal value or range of obscurations are based on the measured particle size.

Optionally:
i) when the particle size is smaller than a lower threshold size, the optimal range of obscuration may be is constrained to be less than an upper limit; and/or
ii) when the particle size is greater than an upper threshold size, the optimal range of obscuration may be constrained to be greater than a lower limit.

The upper or lower threshold size may be Dv50. The Dv50 upper threshold may be 0.5 to 2 microns, for example 1 micron. The upper limit for obscuration may between 8% and 15%, for example 10% or 11%. The lower limit for obscuration may between 2% and 6%, for example 4%.

The method may comprise prompting a user to provide an estimated particle density. The at least one measurement parameter may comprise an agitation amount (e.g. stirrer speed, sonication intensity, sonication duration). The method may comprise limiting a value or range determined as the optimum agitation amount to below a threshold value in response to the estimated particle density being above a threshold value.

The threshold estimated particle density may be 2g/cm³. The threshold agitation intensity may be a stirrer speed of 3000rpm.

The processor may be configured to::
i) provide guidance to the user on correct sampling procedures (e.g. by controlling a display);
ii) provide guidance to the user on sample preparation and choice of dispersant, optionally in response to information input by the user;
iii) automatically identify whether a stable dispersion of the sample is present by checking obscuration and/or automatically performing at least one laser diffraction measurement;
iv) automatically identify suitable measurement conditions (e.g. stir speed/agitation, obscuration, during of sonication) by performing at least one laser diffraction measurement;
v) perform automatic method validation and robustness testing.

Steps i) to v) may be performed in order.

According to a second aspect, there is provided a non-volatile machine readable medium for configuring a processor to:
receive a plurality of measurements and associated measurement parameters, wherein the measurements are performed on at least one particulate sample by using laser diffraction to determine at least one particle characteristic, wherein the plurality of measurements were obtained using a plurality of values for the at least one measurement parameter;
automatically select, based on the at least one particle characteristic and the associated measurement parameters, an optimal value or range of at least one measurement parameter for performing particle characterisation by laser diffraction

The processor may be configured to perform the method according to the first aspect, including any optional features thereof.

According to a third aspect, there is provided a laser diffraction instrument, comprising:
a sample cell;
a light source configured to illuminate the sample cell with a light beam, thereby generating scattered light from the interaction of the light beam with particles within the sample cell;
a plurality of light detectors configured to detect a distribution of the scattered light intensity over a range of different scattering angles;
a processor configured to determine a particle characteristic from the distribution of scattered light intensity over the range of different scattering angles;
wherein the processor is further configured to:
   receive a plurality of measurements and associated measurement parameters, wherein the measurements are performed on at least one particulate sample by using laser diffraction to determine at least one particle characteristic, wherein the plurality of measurements were obtained using a plurality of values for the measurement parameters;
   automatically select, based on the at least one particle characteristic and the associated measurement parameters, an optimal range of at least measurement parameter for performing particle characterisation by laser diffraction.

The processor may be configured to obtain at least some of the plurality of measurements by successively varying the at least one measurement parameter and performing a laser diffraction analysis for each value of the at least one measurement parameter.

The laser diffraction instrument may further comprise a display, wherein the processor is configured to use the display to guide a user through a set of measurements for providing at least some of the plurality of measurements and associated measurement parameters.

The laser diffraction instrument may comprise a particle dispersion unit. The measurement parameters may comprise particle dispersion unit settings, and the processor is configured to automatically control the particle dispersion unit using the particle dispersion unit settings.

The processor may be configured to perform the method according to any of claims 1 to 10.

### DETAILED DESCRIPTION

The invention will be described, by way of example, with reference to the accompanying drawings, in which:
Figure 1 is a schematic diagram of a device for particle analysis by laser diffraction;
Figure 2 is a flow diagram of a method for assessment of dispersion stability;
Figure 3 is an illustration of automatic classification of dispersion instability;
Figures 3a to 31 are detailed views of inset graphs from Figure 3;
Figure 4 is a graph showing particle sizes over successive measurements with increasing stirrer speed;
Figure 5 is an example method for stirrer speed titration;
Figure 6 is a graph showing particle characteristics measured with different laser obscuration;
Figure 7 is a graph showing a particle characteristics for a subset of obscurations;
Figure 8 is a graph showing mean particle characteristic in each cluster of measurements of Figure 7;
Figure 9 comprises three graphs showing the gradient for each cluster of particle characteristic shown in Figure 7;
Figure 10 shows particle size against obscuration, illustrating that there is a stable region in which the gradient of particle size with respect to obscuration is low (flat);
Figure 11 shows an example method for obscuration titration;
Figure 12 is a graph illustrating a dispersion titration;
Figure 13 shows an example method for ultrasound titration;
Figure 14 is a graph illustrating a pressure titration;
Figures 15, 16 and 17 are flow diagrams showing example methods.

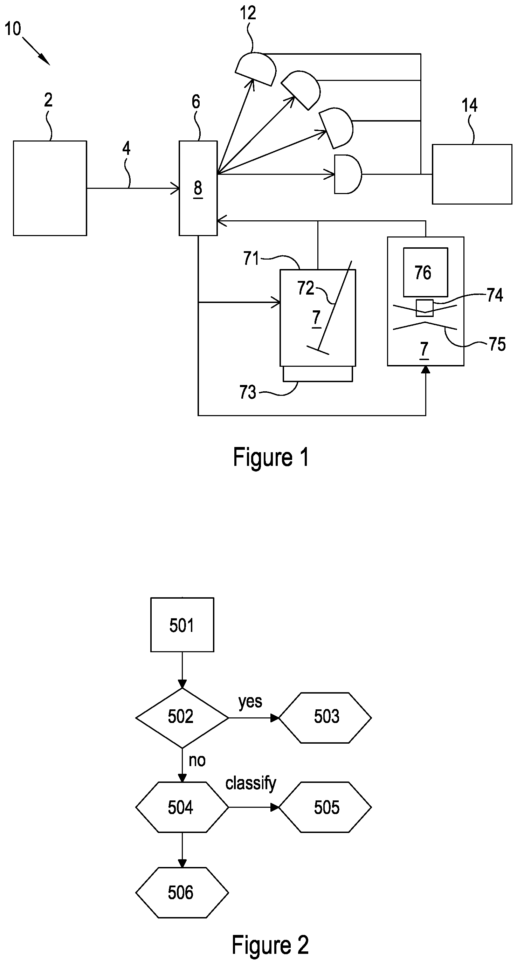

Referring to Figure 1, a laser diffraction instrument 10 is shown, comprising a light source 2 (e.g. a laser or LED) that produces a light beam 4. The light beam 4 is incident on a sample cell 8, which contains a sample 6. The sample cell 8 may comprise a flow cell which receives diluent comprising suspended sample from a dispersion unit 7. The sample 6 comprises particles suspended in a diluent fluid.

The dispersion unit 7 may be configured for a wet dispersion (with a liquid diluent) and/or a dry dispersion (with a gas diluent). Both wet and dry dispersion units are illustrated, but either can be omitted, depending on the type of dispersion under analysis.

Where the dispersion unit is configured for a wet dispersion, the dispersion unit will typically comprise a tank 71 and a stirrer 72 and or a sonicator 73 for improving dispersion of the sample particles in the diluent.

Where the dispersion unit is configured for a dry dispersion, the dispersion unit 7 may comprise a hopper 76 for receiving a sample and a sample dispenser 74 for dispensing the sample from the hopper 76 into a stream of diluent gas (e.g. into a venturi 75). The sample dispenser 74 may comprise a vibrating tray. The stream of diluent gas may be provided at a gauge pressure defined by a control valve (not shown), with higher flows resulting from higher pressures.

The operating parameters of the dispersion unit 7 (such as hopper gap, sample dispense rate, gas pressure, stirrer speed, sonication intensity, sonication duration, diluent circulation rate) may be controlled by processor 14.

A dispersion comprising diluent and sample particles may be circulated through the sample cell 8 from the dispersion unit 7.

The light beam 4 is scattered by interacting with the particles of the sample, thereby producing scattered light. The scattered light varies in intensity with scattering angle. The scattering angle is the angle between the illuminating light beam and the scattered light. A plurality of detectors 12 are disposed at different scattering angles. The detectors 12 are used to sample the intensity of the scattered light at a plurality of different scattering angles. The output from the detectors is provided to processor 14.

The processor 14 is configured to determine, from the output from the detectors, particle characteristics. For example, the distribution of scattered light intensity at different angles is characteristic of the particle size. A particle size (e.g. Dv10, Dv50, Dv90) or particle size distribution can consequently be inferred by the processor 14 from the output from the detectors 12.

Light diffraction particle characterisation can be performed on dry samples, comprising particles dispersed by a diluent gas, or wet samples, comprising particles suspended in a liquid diluent.

### Wet/liquid dispersion

A wet or liquid dispersion is the most common method of sample dispersion for light diffraction particle characterisation. For fine particles (e.g. less than a few microns in size), a wet dispersion may be especially suitable, due to the significant reduction in particle-to-particle adhesion forces that result from the process of surface wetting. Wet samples may enable agglomerated particles to be dispersed with relatively little energy input. However, not all samples will be suited for wet dispersion analysis.

Achieving reproducible results from any particle characterisation technique depends on at least the following three factors:
i) representative sampling;
ii) a stable state of dispersion; and
iii) appropriate measurement conditions.

Parameters affecting these factors are collectively termed "measurement parameters" herein, said term inclusive of any parameters associated with sampling and sample preparation. The importance of each of these factors depends to some extent on the size of the particles of the sample: dispersant and dispersion energy are more important for fine particles, whereas sampling is more important for coarse materials.

In order to assist a user achieving reproducible results from a laser diffraction particle characterisation, a computer implemented tool is provided to guide the user through the procedure for developing an appropriate testing methodology.

The software tool is configured to guide the user through the following (preferably in the order set out below):
1. Correct sampling procedures
2. Sample preparation and choice of dispersant
3. Identifying a stable state of dispersion
4. Identifying suitable method conditions (e.g. stir speed/agitation, obscuration/sample concentration, and duration of ultrasonic sonication if required)
5. Method validation and robustness testing

In an initial stage, a graphical user interface may be provided to obtain relevant information from the user which will help the software with the analysis and the design of experiments. In this section, the user is prompted to input information such as: the expected/target particle size, whether agglomerate characteristics or primary characteristics are to be measured, and any other information which will help with experimental design (such as any predetermined dispersant, and to what extent the sample is soluble in the dispersant). Another important factor that may be defined is the target reliability and the variability that is required from the testing. For example, a laser diffraction testing methodology may be defined to meet standards such as USP, ISO or any others.

A table showing example input information is shown below:

**Table 1: Example user defined parameters**

| **User-defined Information** | | |
|---|---|---|
| **Sample Name:** | ^{∗}User Inputs information^{∗} | |
| **Material Name:** | ^{∗}User can select information from database^{∗} | Could be a basic comprising Minerals, inks and toners, |
| **Refractive Index** | ^{∗}User-defined^{∗} | Use database to define these parameters based on material name |
| **Absorption Index** | ^{∗}User-defined^{∗} | Use database to define these parameters based on material name |
| **Density** | ^{∗}User-defined^{∗} | Use database to define these parameters based on material name |
| **Expected Particle Size** | ^{∗}Optional^{∗} | This will help with selecting obscuration ranges and a good starting point. Particle size obtained by microscopy for example. |
| **Selected Dispersant** | ^{∗}Optional^{∗} | |
| **Does the material in the selected dispersant** | **dissolve** ^{∗}Only suitable if the previous option is answered ^{∗} | Useful when monitoring stir speed titration |
| **Is material multiple modal** | ^{∗}Select if bimodal and define if possible^{∗} | Will help with analysis |
| **Are you measuring Agglomerates or primary particles** | ^{∗}Option of either agglomerates or primary particles^{∗} | Will help with decision for ultrasound titration |
| **Selected Variabilities check** | ^{∗}Define the type of variability check^{∗} | ISO Standards, USP standards, % Residuals or other. |

One of the options to define method repeatability is using the ISO standard 11320.2020. This standard requires the user to perform five consecutive measurements on a dispersed single-shot test sample. The ISO standard defines minimum method repeatability for laser diffraction for six consecutive readings from one single shot test sample:
- Dv10: RSD < 3%,
- Dv50: RSD < 2.5 %
- Dv90: RSD < 4 %.

An intermediate precision may be defined, requiring 3 to 5 separate test samples be measured, and that the average cumulative volume at the required percentile shall not exceed the pre-calculated tolerance limits Uiim.

USP <429> defines standards for method repeatability for laser diffraction. For USP standards the results from laser diffraction are considered adequate if for six readings:
- Dv50: RSD ≤ 10 %
- Dv10 and Dv90: RSD ≤ 15 %
- Dv50 less than 10 um, these maximum values are doubled.

In some examples, an earth movers' distance (EMD) may be employed in defining a target method repeatability. EMD is a measure of the distance between two probability distributions over a region, which can be directly related to similarities between data. Other options include a user defined custom percentage variability in a sample property (such as such as Dv10, Dv50 and Dv90) between a defined number of successive values.

### Representative sampling

Following the initial input from the user, software tool will advise the user on an appropriate procedure for taking an aliquot or sample from a quantity of the material to be characterised. For example, a bulk particulate from which a sample is to be obtained may be housed in a container or a bottle. It is important that the sample be representative of the particulate that the user intends to analyse. Particulates have a tendency to segregate. In order to avoid a non-representative sample, the user may be advised by the software tool to mix the sample thoroughly. Examples of suitable methods for mixing the bulk particulate are to roll the container around for at least 2 minutes in different orientations. Shaking the container should be avoided - this may segregate the particles comprised in the sample by size.

Representative sampling is a major factor especially when taking measurements for coarse particles. The advice provided will be displayed in the workflow GUI in an appropriate format, responsive to the user inputs on the sample. For example, if the sample is identified by the user as being obtained from a bulk powder, the workflow will recommend the bulk powder is mixed thoroughly using a riffler or by rolling with two hands for around 20 seconds in different orientations prior to sampling

The next thing to consider will be how much sample will be required for the measurement. The guidance provided in the ISO standards suggest a minimum of 400 particles is required for a laser diffraction error below 5 %. Using the density of the material provided by the user and the expected particle size provided by the user, the software tool may determine a minimum sample mass required to achieve reproducible results and provide this to the user (e.g. via a display).

### Sample preparation

Subsequent to providing guidance on sampling, the software tool may guide the user to prepare the sample for addition to the light diffraction particle characterisation tool.

The software tool may suggest a list of liquid dispersants, organised in terms of polarity and provide information on carrying out a test for checking wettability and solubility correctly.

For a light diffraction measurement the dispersant should:
i) Provide good wetting of the sample (enabling dispersion)
ii) Not dissolve the sample
iii) Not contain bubbles
iv) Have a suitable viscosity
v) Be transparent to the illuminating beam
vi) Have a different refractive index to the sample
vii) Be chemically compatible with the materials used in the instrument.

The most commonly used dispersant is water. However, water is not suitable for every sample, whether due to poor wetting or dissolution of the sample. As a general rule of thumb, solubility of the sample in the dispersant can be minimised by using a dispersant of opposite polarity to the sample, however this is balanced by the need for particle wetting which becomes more difficult without the aid of surfactants for large differences in polarity. A list of possible dispersants in decreasing order of polarity is shown in Table 2.

**Table 2: Example dispersants in decreasing order of polarity**

| **Dispersant** | **Examples** | **Polarity** |
|---|---|---|
| Water/deionised water | | Very polar |
| Organic acids | | I |
| Alcohols | methanol, ethanol, isopropyl | I |
| Simple alkanes | hexane/heptane/ iso-octane/cyclohexane | I ↓ |
| Long-chain alkanes and alkenes | dodecane/mineral oils/sunfloweroil/palm oil | Very non-polar |

An example of a test for checking whether a dispersant liquid is appropriate is to drop some particulate sample in a beaker of the dispersant. It can be determined visually whether the sample readily disperses in the diluent. This visual check is quicker than carrying out measurements on a range of different dispersants. Good wetting between particles and dispersant shows a uniform suspension of particles in the liquid, poor wetting may show droplets of liquid on top of the powder, or significant agglomeration and sedimentation.

Furthermore, it can be visually determined whether the sample dissolves in the diluent.

If a user is unsure, the software may prompt the user to analyse the sample and any obscuration change will be monitored during agitation (e.g. stirring or sonication). The stability of the sample in the diluent can also (or alternatively) be analysed visually by leaving the sample in diluent to stand for some time.

If water is being used as the dispersant, surfactants may be suggested by the software tool to improve the stability (e.g. to prevent agglomeration).

Surfactant should be added in small quantities, typically one drop per litre of dispersant. If too much surfactant is added the action of stirring and pumping the sample may cause it to froth, causing bubbles to be introduced into the system. Bubbles may cause scattering which is difficult to distinguish from scattering arising from particles, which can bias the measurement. Anti-foaming agents may be added to prevent the formation of bubbles but, because these may contain particulates, it is important that these are added to the dispersant before the background is measured.

The software tool may prompt the user to:
1. Add a small drop of surfactant to the sample in a dry beaker and mix into a thick paste.
2. Add the dispersant and mix again.

This approach may avoid agglomeration of the sample.

Examples of commonly used surfactants are listed below, in Table 3

**Table 3 - Surfactant information**

| | |
|---|---|
| Surfactant | Nature |
| Igepal^{™} | Non-ionic |
| Teepol L^{®} | Non-ionic |
| Synperonic^{®} N | Non-ionic |
| Aerosol^{®} OT | Anionic (solid) |
| Sodium dodecyl sulphate | Anionic |
| Hyamine 2389 | Cationic |

Admixtures may be used as an alternative (or in addition) to a surfactant. Admixtures work by causing the particle surface to become charged, causing particles to repel each other (i.e. providing a zeta-potential to aid dispersion). Admixtures are added in larger quantities, typically one gram per liter. A list of commonly used admixtures is given below:
- Sodium Hexametaphosphate (e.g. Calgon)
- Sodium Pyrophosphate
- Trisodium Phosphate
- Ammonia
- Sodium Oxalate
- Calcium Chloride

Many of these are solid materials that are dissolved into the dispersant, and the solution should be filtered after preparation to remove impurities.

The software tool may prompt the user to prepare a slurry for addition to a light diffraction instrument. A slurry can be prepared by mixing a small quantity of concentrated sample, dispersant, and any additives.

Once the particles have been dispersed, the sample can be added to a dispersion unit of the light diffraction instrument without subsequent addition of surfactants. To prevent the sample settling out in the beaker, the software may instruct the user to:
1. Use a pipette to continually pipette the sample up and down while also stirring.
2. Use the pipette to add sample to the dispersion unit tank.

### Stability assessment

The next part in the workflow for the software tool is assessing the stability of the sample in the light diffraction instrument. The user may be prompted by the software tool to add the sample to the laser diffraction instrument (e.g. to a dispersion unit) to produce a suitable amount of obscuration. For an expected particle size of < 1 micron, a suitable obscuration range may be 3-5% obscuration. For an expected particle size of 1-10 microns, a suitable obscuration range may be 5-10% obscuration. For a particle size greater than 10 microns, an obscuration range of 10-20% may be appropriate.

The software tool may automatically determine an appropriate obscuration range from preliminary analysis results, obtained as the sample is added to diluent in the dispersion unit and the resulting dispersion is circulated through the sample cell.

If the user has provided the expected particle size, the software may suggest an obscuration range based on the above defined ranges. The software tool may direct the user to add the sample to this obscuration range and then take a series of short duration measurements (e.g. 2s to 10s, for example 5s) across a few minutes (e.g. 2 to 5 minutes, for example 3 minutes). Once all the results have been collected, particle size (e.g. Dv10, Dv50 and Dv90) may be plotted with respect to time and analysed to check for stability in particle characteristics.

A common issue in light diffraction analysis is when the material is dissolving. This can be identified by a decrease in light obscuration as the fine particles will be getting smaller and then disappear. Under these circumstances, the coarse fraction will become more dominant. Plotting obscuration vs Dv10 on a live trend graph will show decreasing laser obscuration and increasing Dv10 if dissolution is present.

The software will automatically identify whether the sample is dissolving and the rate at which it is dissolving. The software will subsequently suggest a suitable time frame over which the sample is stable and suitable for laser diffraction measurements, for example using the ISO standards for variability (or whatever standard the user has input that they are targeting). Furthermore, the software tool may notify the user that the sample is liable to dissolve, but can still be measured with some precautions (e.g. on maximum measurement duration etc). If the sample is dissolving rapidly the software tool will prompt the user to consider using surfactant or additives, or to change the dispersant.

The second most common issue is agglomerating material. If the sample is agglomerating, a tail of large particles will appear in the distribution. Another common sign of agglomeration is a gradual decrease in the light obscuration. This will apparent from a trend of obscuration vs Dv90. If the sample is agglomerating the obscuration will decrease and the Dv90 will increase. If the software identifies the sample is agglomerating, it may prompt the user to increase the stir speed to disperse the coarse particles first, and this does not work, to instruct the user to try using ultrasonics.

The software tool may guide the user to add the sample to the dispersion unit. A predetermined number of measurements may subsequently automatically be taken under the control of the software (for example, five). The software may analyse the results to look at the trends in the data (as mentioned above) to identify whether the sample is unstable or showing signs of the common issues mentioned above (dissolution or agglomeration). If this is occurring the software may guide and suggest to the user on how they can improve the state of dispersion. For example, using surfactants or ultrasound when necessary. If the sample is stable (within ISO limits or other limits defined by the user), the software will direct the user to the next stage and carry out the necessary titrations.

The next part of the workflow may comprise automatically performing a series of tests to identify suitable settings for the specific sample type for analysis using the light diffraction instrument. For wet measurements (i.e. with a liquid dispersant) the main settings to consider are: stir speed, suitable obscuration ranges and whether ultrasonics are required.

To identify each parameter a titration may be performed which automatically determines a particle characteristic as the parameter is varied. A benefit of a software tool automatically performing these parameter titrations is that the software will provide a simple procedure to automatically identify suitable settings. In each titration a minimum of five measurements may typically be sampled from each parameter.

Figure 2 is a flow diagram illustrating a method of assessing the stability of a dispersion for laser diffraction analysis. At step 501 the software tool may automatically control the laser diffraction instrument to perform a series (e.g. at least 5, e.g. 6) of light diffraction measurements of the dispersion. At step 502, the software may analyse whether the results are stable, for example to a pre-defined standard such as an ISO standard (e.g. as described herein), or another similar standard. If results are found to be stable, the software tool may report this to the user and move on to the next step (e.g. a stirrer speed titration).

If the results are not stable to a predefined standard (e.g. an ISO standard), the software may perform an automatic analysis of the results to identify a cause for this, in step 504. The causes for a dispersion not being stable may comprise specific classes: deagglomeration; dissolution; agglomeration and sedimentation. Depending on the results of successful classification, the software may report appropriate remedial action to improve the stability of the dispersion in step 505. If the software is unable to classify the reason for the dispersion instability, at step 506 a suggestion may be made (e.g. displayed to a user) to use a dry dispersion, or the user may be asked to otherwise rethink the dispersion.

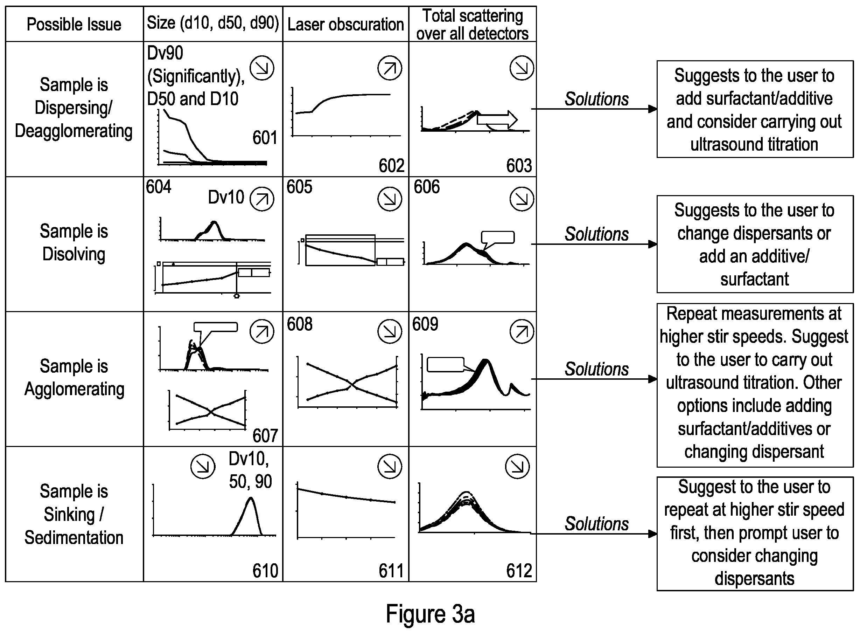

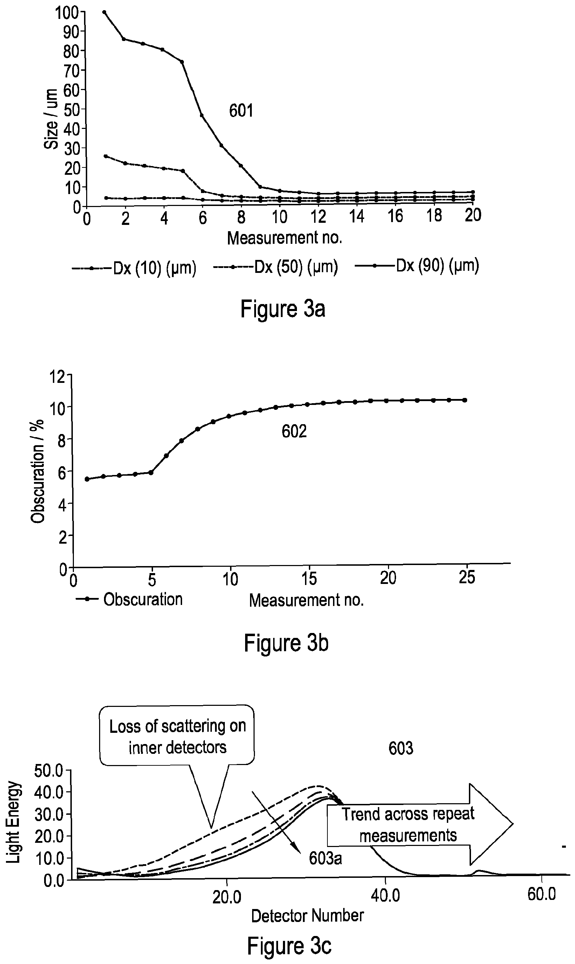

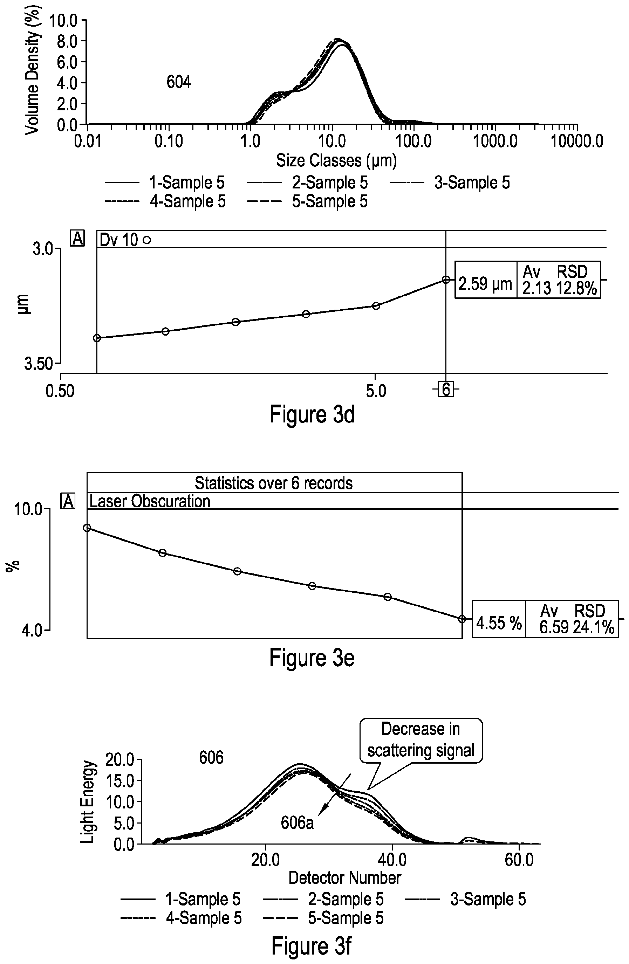

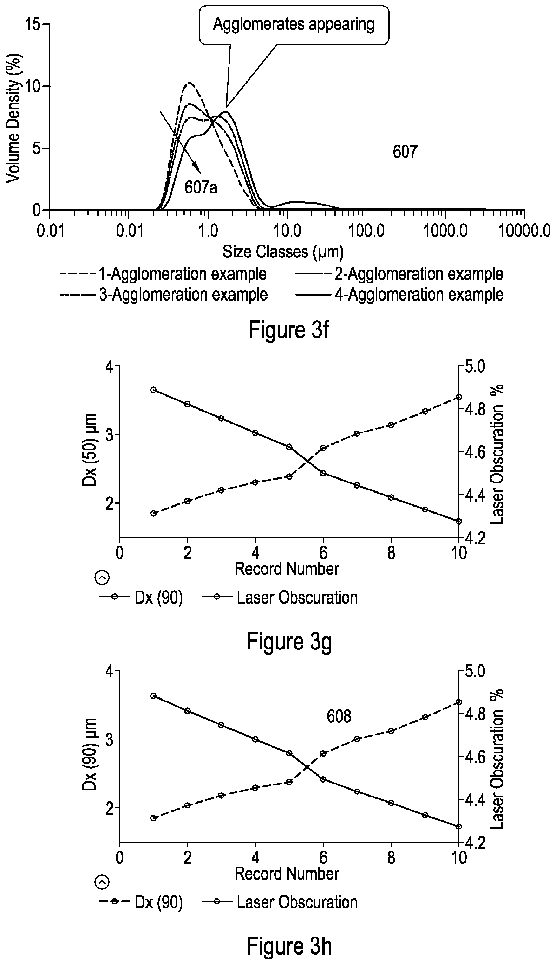

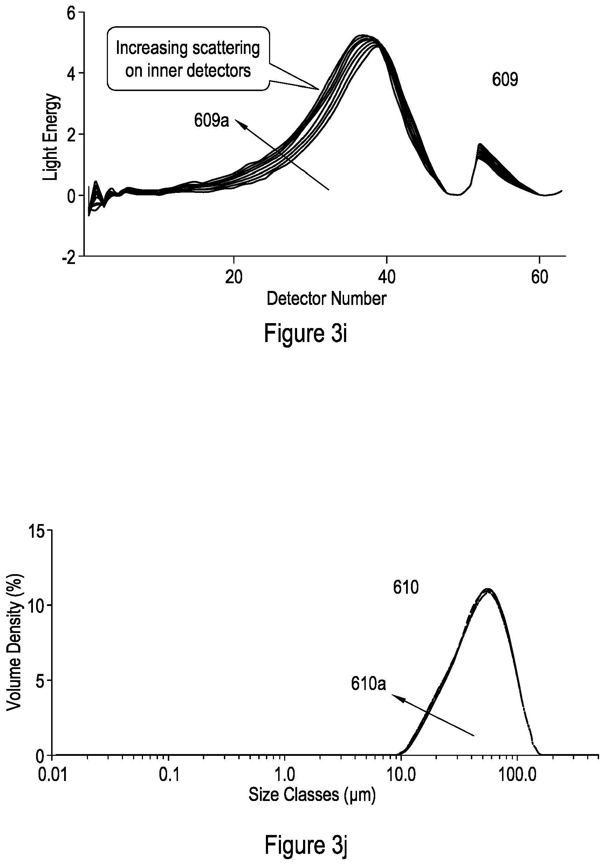

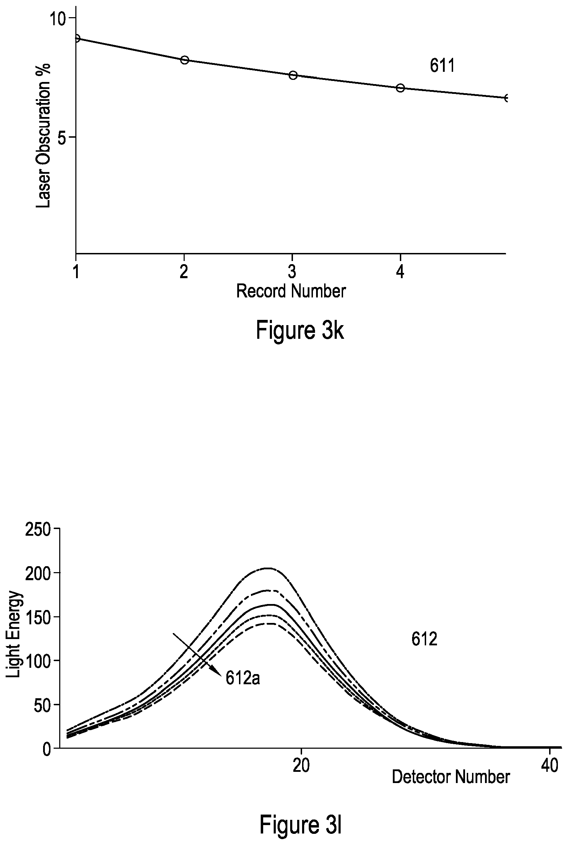

Figure 3 illustrates a set of criteria (and associated illustrative inset graphs) that may be used to automatically identify each of these classes of unstable dispersion. Other approaches may be used, and these examples are illustrative. Particle size (e.g. Dv10, Dv50, Dv90), obscuration and total scattering over all detectors are three measurands that may be used to classify unstable dispersions. Deagglomeration may be identified when there is a negative trend in particle size 601, a positive trend in laser obscuration 602, and a negative trend in total scattering 603. Dissolution may be identified when there is a positive trend in particle size 604, a negative trend in obscuration 605, and a negative trend in total scattering 606. Agglomeration may be identified when there is a positive trend in particle size 607, a negative trend in obscuration 608 and a positive trend in total scattering 609. Sedimentation may be identified when there is a negative trend in each of particle size 610, obscuration 611 and total scattering 612.

Figure 3a shows the inset graph 601 from Figure 3 in more detail. Particle size (Dv10, Dv50 and Dv90) are shown on the y axis over 20 successive measurements on the x axis. A trend of decreasing particle size, particularly of Dv90 particle size, may indicate that larger particles (which comprise agglomerates) are breaking down. A threshold gradient, or threshold % change in particle size over the series of measurements may be defined as a first indicator for deagglomeration.

Figure 3b shows the inset graph 602 from Figure 3 in more detail. Obscuration % is plotted against measurement number, over a sequence of 20 measurements. A trend of increasing obscuration is present, which is consistent with larger particles breaking down into smaller particles. A threshold gradient, or threshold % change in obscuration over the series of measurements may be defined as a second indicator for deagglomeration.

Figure 3c shows the inset graph 603 from Figure 3 in more detail. Light energy at each of a plurality of detectors is shown (with increasing detector number corresponding with higher scattering angles) over a set of 5 measurements. Arrow 603a points from earlier curves to later curves. Scattering at lower angles is reduced in later measurements, which is indicative of larger particles breaking up (i.e. of deagglomeration). The net effect of the larger particles being deagglomerated is to reduce the total amount of scattering light energy detected by the detectors (i.e. the trend of area under the curve for successive measurements is negative). A threshold gradient in the total scattering detected by all detectors, or threshold % change in the total scattering detected by all detectors over the series of measurements may be defined as a third indicator for deagglomeration.

If all three of the indicators for deagglomeration are met, the software may report to the user that the dispersant is deagglomerating, and that they should consider the use of a surfactant, and to consider an ultrasound titration.

Figure 3d shows the inset graphs 604 from Figure 3 in more detail. A particle size distribution is shown (top) with volume % shown on the y axis and size class on the x axis. A set of 5 curves are shown, corresponding with five successive measurements. The trend in these measurements is for a decrease in the volume % comprising smaller particles. Dv10 particle size against measurement number is plotted (bottom), with a trend of increasing Dv10 over successive measurements. This pattern of increasing particle size, and more specifically of increasing Dv10, may be defined as a first indicator for dissolution. For example, a threshold gradient, or threshold % change in particle size (e.g. Dv10) over the series of measurements may be defined as the first indicator for dissolution.

Figure 3e shows the inset graph 605 from Figure 3 in more detail. Laser obscuration is shown plotted against sample number, over five successive measurements. The obscuration decreases with successive measurements. A threshold gradient, or threshold % change in obscuration over the series of measurements may be defined as the second indicator for dissolution.

Figure 3f shows the inset graph 606 from Figure 3 in more detail. Light energy at each of a plurality of detectors is shown (with increasing detector number corresponding with higher scattering angles) over a set of 5 measurements. Arrow 606a points from earlier curves to later curves. Scattering at high angles is reduced in later measurements, which is indicative of smaller particles being removed (i.e. of dissolution). The net effect of the smaller particles being removed is to reduce the total amount of scattering light energy detected by the detectors (i.e. the trend of area under the curve for successive measurements is negative). A threshold gradient in the total scattering detected by all detectors, or threshold % change in the total scattering detected by all detectors over the series of measurements may be defined as a third indicator for dissolution.

If all three of the indicators for dissolution are met, the software may report to the user that the dispersion is dissolving and that they should consider changing the dispersant, and/or the use of a surfactant.

Figure 3g shows the inset graphs 607 from Figure 3 in more detail. A particle size distribution is shown (top) with volume % shown on the y axis and size class on the x axis. A set of 5 curves are shown, corresponding with five successive measurements, with arrow 607a pointing from earlier measurements to later measurements. The trend in these measurements is for an increase in the volume % associated with larger particles. Agglomerates are appearing in the form of larger particles in successive measurements. Dv90 particle size (primary y axis) and obscuration (secondary y axis) are also shown (bottom) plotted against measurement number, showing a trend of increasing Dv90 particle size, and a trend of decreasing obscuration. This pattern of increasing particle size, and more specifically of increasing Dv90, may be defined as a first indicator for agglomeration. For example, a threshold gradient, or threshold % change in particle size (e.g. Dv90) over the series of measurements may be defined as the first indicator for agglomeration.

Figure 3h shows the inset graph 608 from Figure 3 in more detail. Dv90 particle size (primary y axis) and obscuration (secondary y axis) are shown (bottom) plotted against measurement number, showing a trend of increasing Dv90 particle size, and a trend of decreasing obscuration. This pattern of decreasing obscuration may be defined as a second indicator for agglomeration. For example, a threshold gradient, or threshold % change in obscuration over the series of measurements may be defined as the second indicator for agglomeration.

Figure 3i shows the inset graph 609 from Figure 3 in more detail. Light energy at each of a plurality of detectors is shown (with increasing detector number corresponding with higher scattering angles) over a set of 5 measurements. Arrow 609a points from earlier curves to later curves. Scattering at lower angles is increased in later measurements, which is indicative of larger particles being created (i.e. by agglomeration). The net effect of the larger particles being created is to increase the total amount of scattering light energy detected by the detectors (i.e. the trend of area under the curve for successive measurements is positive). A threshold gradient in the total scattering detected by all detectors, or threshold % change in the total scattering detected by all detectors over the series of measurements may be defined as a third indicator for agglomeration.

If all three of the indicators for agglomeration are met, the software may automatically report this to the user. Optionally, the software may automatically repeat the measurements with a higher stirrer speed (or higher agitation). The software may, for example suggest a stirrer speed titration. The software may automatically suggest to the user that an ultrasound titration should be performed. The software may further suggest at least one of changing the dispersant and adding a surfactant or additive to the dispersion.

Figure 3j shows the inset graph 610 from Figure 3 in more detail. A particle size distribution is shown with volume % shown on the y axis and size class on the x axis. A set of 5 curves are shown, corresponding with five successive measurements, with arrow 610a pointing from earlier measurements to later measurements. The trend in these measurements is for a slight increase in the volume % associated with smaller particles. Larger particles are settling out slightly more rapidly than smaller particles. This pattern of decreasing particle size (e.g. Dv10, Dv50 or Dv90), may be defined as a first indicator for sedimentation. For example, a threshold gradient, or threshold % change in particle size over the series of measurements may be defined as the first indicator for sedimentation.

Figure 3k shows the inset graph 611 from Figure 3 in more detail. Laser obscuration is shown plotted against sample number, over five successive measurements. The obscuration decreases with successive measurement. A threshold gradient, or threshold % change in obscuration over the series of measurements may be defined as the second indicator for sedimentation.

Figure 31 shows the inset graph 612 from Figure 3 in more detail. Light energy at each of a plurality of detectors is shown (with increasing detector number corresponding with higher scattering angles) over a set of 5 measurements. Arrow 612a points from earlier curves to later curves. Scattering over all angles is reduced as a result of sedimentation. A threshold gradient in the total scattering detected by all detectors, or threshold % change in the total scattering detected by all detectors over the series of measurements may be defined as a third indicator for sedimentation.

If all three of the indicators for sedimentation are met, it may be reported to the user that the dispersion is subject to sedimentation. A repeat measurement may be automatically performed (or suggested to the user) with a higher agitation (e.g. stirrer speed), and/or the user will be prompted to consider changing dispersant.

If the software cannot classify the instability as resulting from any of the above classifications, the software may report this to the user, and advise that they should consider dry measurements, or otherwise re-think whether a more stable dispersion can be obtained.

### Model selection

The software tool may request that the user selects a model. Options for the model may comprise: a general purpose model, a narrow model or a verification model. A model may comprise at least one of: an inversion approach used to get from the scattering data (measured by the detectors) to the particle size or particle size distribution, a smoothing factor, a selection of detectors from which scattering data is used to determine a particle size (or size distribution).
(1) General purpose model- This model is appropriate for most samples, including naturally occurring and milled materials. The software may guide the user to select this model unless you know that your sample meets the more specific requirements of more specialized analysis modes. The general purpose model may employ nonnegative least squares in inversion.
(2) Narrow Model- This model is appropriate for samples consisting of one or more narrow modes, where each mode spans much less than a decade in size. It is not intended for use with broad distributions which exhibit more than one peak. The model may be similar to the general purpose model. This model may employ nonnegative least squares for inversion.
(3) Verification Latex Model- This model is designed to enable the analysis of one or more very narrow Latex size standards, such as those used during verification of the instrument. This model may employ a ratio of forward scatter to backscatter to determine particle size. A smoothing factor may be employed to keep a particle distribution monomodal.

The software may use rules to suggest an correct analysis model (or input from a user may be sought). The analysis model may be selected automatically by the software once an initial measurement has taken place. The model that is used may be confirmed with every measurement performed. General purpose may be used as default (suitable for most material), the narrow model may be automatically selected when the span is less than 1.00. The verification model may be automatically selected when the span is less than 0.25.

### Illumination type selection

The light source in some laser diffraction instruments has more than one wavelength (e.g. a red laser light and blue light, which may be provided by LEDs). In some instruments (e,g the Mastersizer 3000) the blue light may provide improvement in the measurement resolution of particles below 1 µm in size.

In certain embodiments, the software will take a measurement using a shorter wavelength light source (e.g. blue) automatically (or by default) when the particle size (e.g. determined an initial analysis, or input by a user) is less than 1 micron. The software can also use the observed blue light obscuration compared to the observed red-light obscuration - a higher obscuration of blue light is associated with smaller particle size (for example <10nm).

### Stirrer speed titration

The stirrer in a wet dispersion unit (from which sample is circulated through a sample cell for light diffraction analysis) should ensure that the dispersion is homogenous and that the sample passing through the measurement cell is representative. For larger or denser materials, a stir speed titration should be carried out to check that all of the particles in the sample have been suspended. For emulsion samples (in which the particles comprise immiscible droplets), a stir speed titration can determine at what speed droplets begin to be broken by the action of the stirrer.

During the stirrer speed titration the software automatically carries out a series of measurements at different stir speeds and an optimal stir speed range or value is stored in memory and/or presented to the user at the end of the measurements. The user is initially prompted to add the sample to the dispersant unit to a suitable obscuration (e.g. either 5 % for very fine particles or 10 % for coarse particles). Depending on the sample information input by the user, the initial measurement will be carried at a relatively low stir speed (for example, for emulsions 750 RPM, everything else 1500 RPM, but these examples are merely illustrative and will vary depending on the design of the stirrer and the light diffraction instrument). The software will gradually increase the stirring speed (for example in increments of 500 RPM when trying to measure primary particles by default) and wait a few minutes for the system to stabilize (by default 5 minutes delay, but different delay times can be used) before taking a measurement.

The software may be configured to identify changes in the particle size and recommend a series of measurements (by default 250 RPM increments). The software will control the light diffraction instrument to carry out the series of measurements autonomously. The series of measurements determined by the software may be responsive to parameters such as the addition of surfactants and the use of different diluents than water. For example, at higher stir speeds bubbles can be produced which lead to inaccurate and misleading results.

By the end of the series of measurements the software will analyse the changes in particle characteristics (e.g. particle size) between each setting and the % residuals. The optimum stir speed may be identified and a suitable range for stir speed suggested over which the results are stable and within the variability defined by the user (for example based on ISO standards).

An algorithm may be used to determine an appropriate stirrer speed (or intensity of mechanical agitation, should another method for agitation be used instead of a stirrer).

Very high intensity agitation may be reserved for dense particles that require a greater force to adequately disperse the sample throughout the sample cell. Particle density may be a parameter that can be provided to the processor by the user (e.g. via an input device, such as a keyboard in the initial stage mentioned above). A threshold particle density may be defined, below which the agitation intensity may be limited to a predetermined threshold. For example, a limit on particle density of 2g/cm³ may be define. Particle densities below this threshold may result in stirrer speeds recommended by the processor (following the algorithm) being limited to 3000RPM or less, thereby preventing high stirrer speeds being recommended when they are not necessary.

An optimal stirrer speed (or range of stirrer speeds, or range of agitation intensity) may be chosen by first looking for a region where the particle sizes are stable. A stirrer speed may be considered to result in a stable particle characteristic if a gradient in the particle characteristic between successive measurements at that stirrer speed is less than a predetermined threshold. A plurality of particle characterisations (e.g. to determine particle size) may be performed with different agitation intensity (e.g. stirrer speed). The agitation intensities may be binned. For example, in the example of stirrer speed, a 500rpm bin width may be used (but other bin widths may also be used, such as 250rpm or 1000rpm). The gradient of particle characteristic (e.g. Dv10, Dv50 etc) with respect to agitation intensity over each bin may be calculated. Bins with a gradient below a minimum threshold (e.g. 0.01) may be identified as comprising the optimal range of agitation intensity.

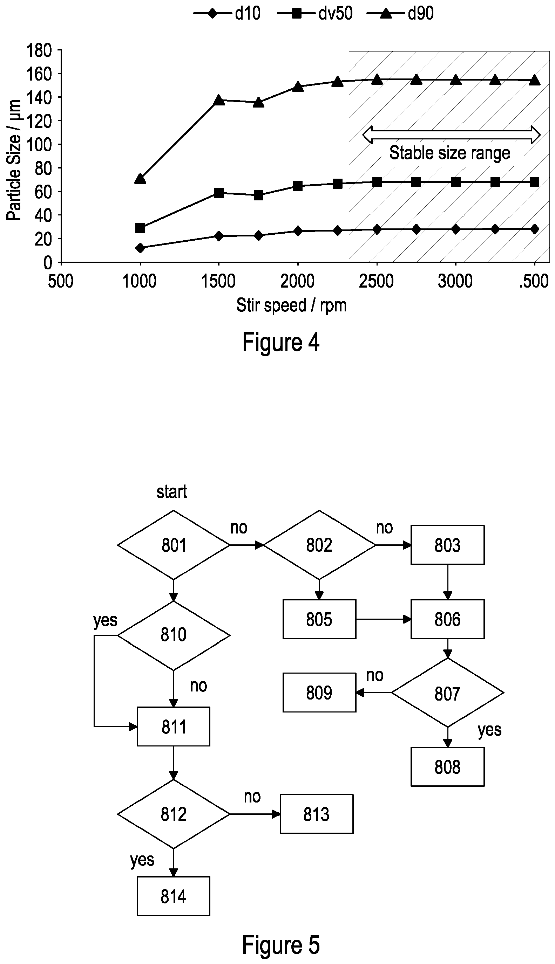

Figure 4 shows particle sizes (Dv10, Dv50 and Dv90, represented on the y axis) over successive measurements on the same sample at progressively increasing stirrer speed (represented on the x axis). The particle sizes stabilize for stirrer speeds greater than ~2400rpm. For this sample, the algorithm may recommend a stirrer speed of greater than 2400rpm, or greater than 2500rpm .

From this set of stirrer speeds on the region of stability, the standard deviation within each set of measurements at each stirrer speed bin may be calculated. The stirrer speed bin with lowest standard deviation has the most measurement and should therefore be the one recommended to the user.

An example algorithm for determining an optimal range of stirrer speeds and a best stirrer speed is set out below.

```
 Perform measurements at a plurality of different stir speeds
 if particle density < limit:
       remove stir speeds > 3000RPM
 bin data into stir speed bins
 for each stir speed bin:
       calculate mean and standard deviation of d10, d50, d90
       calculate gradient of d10, d50 and d90
       if all gradients < 0.01:
              calculate scoring function = sum of all standard
 deviations
              add stir speed bin to range of optimal stir speeds
 best stir speed = minimum of scoring function
 return best stir speed, range of optimal stir speeds
```

The list of best stirrer speeds determined by the algorithm are compared with those determined by an expert user below in Table 4.

**Table 4 - Comparison between stirrer speed values obtained from expert users and calculated by the algorithm**

| **Sample** | **Expert User** | **Algorithm** |
|---|---|---|
| QAS Glass Beads | 2500RPM | 3000RPM |
| Ti64 Renishaw Catalyst | 3400RPM | 3400RPM |
| Yellow Natureinks | 2000RPM | 1500RPM |
| Cotsworld Semi skimmed | 2500RPM | 3000RPM |
| PS Latex | 3000RPM | 2500RPM |
| Ballina Beverages - Coke | 2500RPM | 3000RPM |
| Cellulose (microcrystalline) | 2500RPM | 2000RPM |
| Silicon Carbide | 3000RPM | 3000RPM |
| Silicon Oxide (No sonication) | 3400RPM | 3400RPM |

The algorithm is able to predict a stirrer speed that is adjacent to or the same as the speed recommended by an expert user in most cases.

An example method for stirrer speed titration is shown in Figure 5. At step 801, the user is asked if the sample is an emulsion. If the answer is "no", the software checks (at step 802) whether the expected particle size (Dv50) is greater than 1 micron. If the expected particle size is greater than 1 micron, the user is prompted (at step 803)to add sample to an obscuration of 7-10%. If the expected particle size is less than 1 micron, the user is prompted to add sample to an obscuration of 3-5%. At step 806 a set of laser diffraction measurements are performed automatically at successively increasing stirrer speed (e.g. 1500, 2000, 2500, 3000, and 3400 rpm). At step 807 the software checks whether there is a broad range of stir speed (e.g. 1500rpm) over which the results are stable. If the answer is "yes" the software suggests (at step 808) an optimal range of stirrer speed over which the reported particle size changes the least. If the answer at step 807 is "no", the user may be prompted to run a more narrowly spaced set of stirrer speeds, for example with intermediate stirrer speeds between those defined above. The user may be offered the option of this even when the answer at step 807 is "yes".

If the sample is an emulsion (i.e. the answer at step 801 is "yes") at step 810 the software checks whether an expected particle size is <1 micron. If the answer at step 810 is "yes", the user may be prompted to add sample to 3-5% obscuration, and a set of measurements at successively increasing stirrer speeds performed automatically in step 811. If the answer at step 810 is "no", the user may be prompted to add sample to 7-10% obscuration, and a set of measurements at successively increasing stirrer speeds performed automatically in step 811. The series of increasing stirrer speeds in step 811 may, for example, be: 1200, 1300, 1400, 1500, 1600 and 1700 rpm. At step 812 the software may check for decreasing particle size at higher stirrer speeds. If the answer at step 812 is "no" the software may run further measurements at successively higher stirrer speeds (e.g. up to 2000 rpm or until the particles start to break down). If particles are breaking down and the answer at step 812 is "yes" the maximum stirrer speed may be limited to speeds at which particles do not break down in step 814

A final range for stirrer speed may be selected by the software over which the particle size is stable, for example a range of stirrer speeds over which particle size varies below a threshold amount.

### Obscuration titration

Obscuration provides a good measure of how much a sample is circulating in the dispersion unit. An obscuration titration determines the quantity of sample that should be added to the diluent in the dispersion unit. In some cases when too much sample is added, there is a risk of the phenomena known as multiple scattering which results in a decrease in the particle size determined by the instrument.

If too little sample is added, large particles in the sample may not be represented and the Dv90 may be unstable due to noise in the scattering data. Depending on the initial information provided on the expected particle size the software may suggest a suitable initial obscuration range. If a stir speed titration has previously been carried out, the particle size will have already been determined, and the software may be able to make an initial recommendation for an obscuration based on the already determined particle size. In some embodiments, the user may be prompted by the software to add some sample to the dispersion unit, and the software may control the laser diffraction instrument to perform an initial analysis of particle size (e.g. Dv50), and optionally of particle size distribution (e.g. a measurement of polydispersity, such as Dv90-Dv10).

| **Type of material** | **Obscuration for wet measurements** | |
|---|---|---|
| Very fine particles (e.g. Dv50 <1 um) | | < 5% |
| Fine particles (e.g. Dv50 1-100 um) | | 5 - 10% |
| Coarse particles (e.g. Dv50 >100 um) | | 10 - 20% |
| Polydisperse particles (e.g. Dv50 1-500 um) | | 10 - 20% |

An algorithm may also be used to determine an appropriate obscuration range for the sample, based on measurements obtained from the sample.

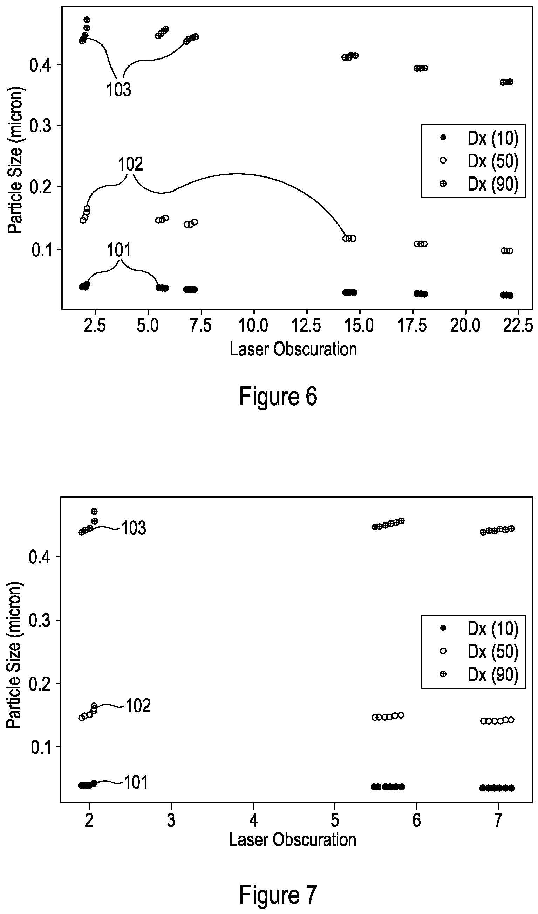

An example of an obscuration titration is shown in Figure 6, for a beverage. Figure 6 shows the particle size on the y-axis (101 Dv10, 102 Dv50 and 103 Dv90) plotted with respect to obscuration on the x-axis.

The beverage contains small particles that are less than 1µm in diameter. For particles comprising particles in this size range the software may be configured to ignore obscuration values greater than 10% due to the risk of multiple scattering. Similarly, for particles greater than 10µm obscuration values less than 5% are ignored due to the low signal to noise ratio. After this filtering, the data points shown in Figure 7 are left.

Figure 7 contains measurements in three obscuration bins. Binning the data automatically may not consistently result in three bins containing data. Due to the wide spread of obscuration across measurements within each group, it is possible that obscuration measurements within one group might span between bins if fixed bin widths were used. If bin widths were set to be broad enough to prevent this, then it is likely that the binning process might inadvertently combine groups of obscuration measurements.

To prevent this, a k-means clustering algorithm (or another robust clustering method) may be used to sort the data into k clusters. In order to group the data into the correct number of clusters, a user may be prompted to select the number of obscuration values for which particles have been measured (e.g. corresponding with a particular loading of sample into the diluent volume in the dispersion unit).

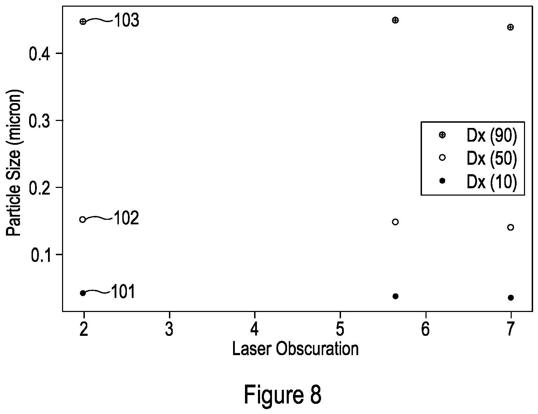

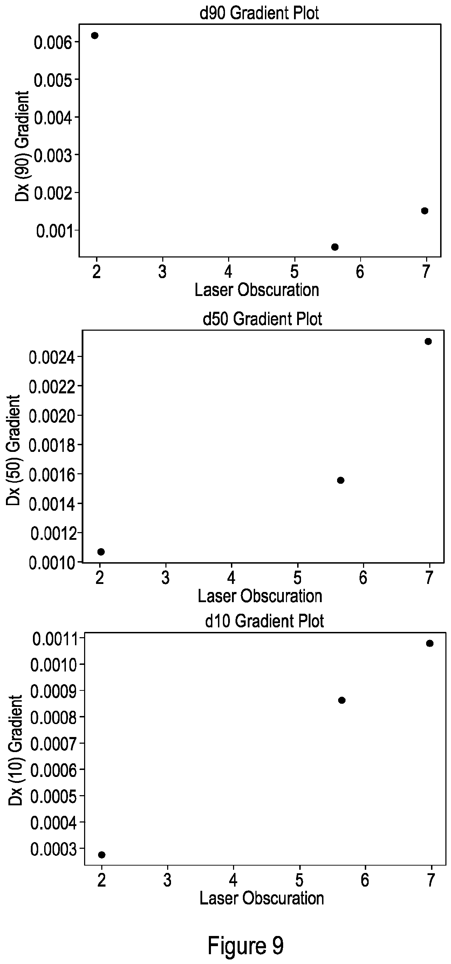

The mean sizes for each cluster are contained in Figure 8. The statistics that determine the optimum obscuration may be derived from the particle sizes in Figure 8. Stability is determined here by a plateau in particle size, and an algorithm may be implemented which looks for the minimum gradient between the particle characteristic (e.g. Dv50) within the obscuration bins will return the optimal obscuration value. The gradients for each of the three sizes are shown in Figure 9.

The particle characteristics (Dv10, Dv50 and Dv90) all show different trends. For obscuration, a maximum acceptable gradient may be set as a multiple of the lowest gradient. The multiple may be a number between 3 and 5, for example 4. Any obscuration value less than this limit may be deemed to be acceptable. A range of acceptable obscuration values may be defined as the range of values of obscuration found to be within this factor of the lowest gradient of variation.

Not all samples will returned an acceptable obscuration range using this approach. A range of obscuration values is required as the user may find it difficult to precisely target a single obscuration value by adding a specific amount of sample into the dispersion unit. Targeting a range of obscuration values may be much easier for the user of the instrument. In order to ensure a range of obscurations can be returned, the multiple of the lowest gradient that defines a range of acceptable gradients may be increased incrementally (e.g. in steps of 1) if less than two obscuration values were returned. The incremental increase may be continued until the algorithm returns multiple obscuration values. To determine a range of acceptable values the lower obscuration value may be rounded down to the nearest integer % value and the highest value may be rounded up. The resulting obscuration values returned by the algorithm for a range of different sample types according to this approach are included below:

**Table 4: Comparison between obscuration values obtained from expert users and calculated by the example algorithm**

| **Sample** | **Expert User** | **Algorithm** |
|---|---|---|
| QAS Glass Beads | 5-10% | 7-11% |
| Ti64 Renishaw Catalyst | 10-15% | 13-16% |
| Yellow Natureinks | 3-6% | 6-8% |
| Cotsworld Semi skimmed | 3-6% | 3-6% |
| PS Latex | 2-4% | 2-4% |
| Ballina Beverages - Coke | 5-7% | 5-7% |
| Cellulose (microcrystalline) | 4-9% | 4-7% |
| Silicon Carbide | 2-5% | 5-8% |
| Silicon Oxide (No sonication) | 8% | 5-7% |
| Silicon Oxide (Internal) | 2-5% | 3-6% |
| Silicon Oxide (External) | 2-5% | 5-7% |

The results show that the algorithm accurately estimated the optimal laser obscuration ranges in most cases.

The features of the approach discussed above for identifying an optimal obscuration value or range may be applicable to determine other measurement parameters.

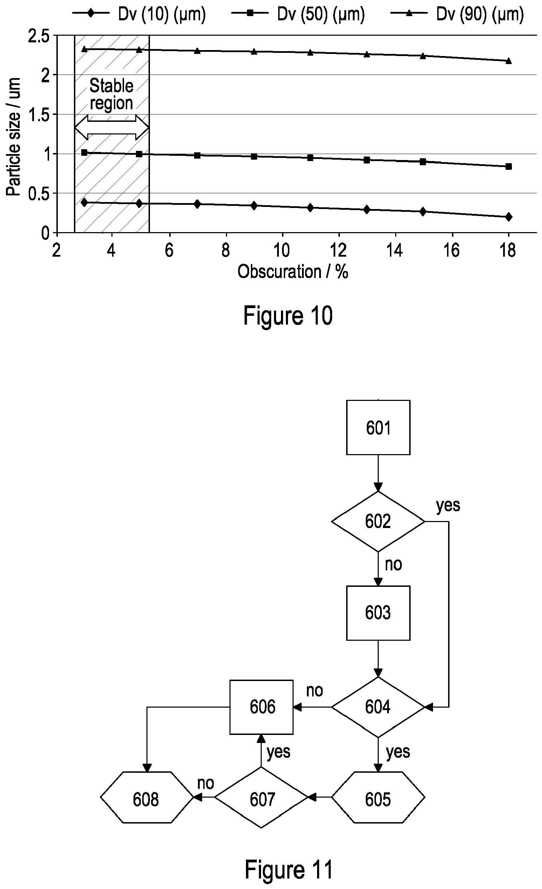

Figure 10 illustrates a stable region for obscuration. The particle size (Dv50) in this example is relatively small ~1 micron, and lower values of obscuration are required in order for the particle characteristic to remain stable. A stable region is defined on the graph as between around 3% and 5% obscuration.

Figure 11 shows a flow diagram of an example method for performing an obscuration titration. At step 601 the user is prompted to: i) add sample until an obscuration range of 2-3% is reached; ii) then add sample until an obscuration range of 4-5% is reached; iii) then add sample until an obscuration range of 7-9% is reached. After each obscuration range is reached, the software automatically carries out a plurality (e.g. 6) of laser diffraction analyses (by controlling the laser diffraction instrument). After measurement at an obscuration range of 7-9%, the software analyses the data at step 602 to look for evidence of multiple scattering. If multiple scattering is detected, no further measurements are taken and the method moves to step 604. If multiple scattering is not detected at step 602, the user is prompted to add sample to: 10-12%, 15-17% and 19-21% obscuration, and measurements are again taken at each level. At step 604 the measurements at each obscuration are analysed, and stability assessed (as discussed above). At optional step 604, the software determines whether the sample is stable over a 2/3 of the obscuration ranges tested. If the answer is "yes", the software suggests a range of obscuration where the particle size changes the least, for example based on the lowest relative standard deviation (or as discussed above). If the answer is "no" the software may suggest (and or automatically run), at step 606, a more detailed obscuration titration with smaller increments in obscuration. At step 607 the user may be offered the option of the more detailed obscuration titration 606. At step 608, an optimal range of obscuration is reported to the user (either based on the coarse titration, or the more detailed titration).

### Ultrasound titration

An ultrasound titration may be appropriate, dependent on the type of measurement the user has indicated that they want to make. If the user indicates that they want to characterise agglomerates, ultrasound will not be recommended, since this is likely to break up any agglomerations. If the user indicates that they are interested in the characteristics of primary particles, ultrasound may be recommended. A dispersion titration that includes ultrasound titration may enable the user to determine an optimal range of power and duration ultrasound required to disperse the sample. If the dispersion titration is flat, and no reduction in particle size is observed during ultrasound then the sample may be fully dispersed without the use of ultrasound. Conversely, if a continual decrease in particle size is observed during sonication using ultrasound (e.g., a stable particle size has not been reached), then the primary particle may be being broken up by the ultrasound.

The particle size should remain stable after the ultrasound has been applied. If it starts to increase, due to particle re-agglomeration, then an additive may be required to stabilize the dispersion. The software tool may guide the user to add the sample to the dispersion unit to a suitable obscuration and set the dispersion unit with a suitable stir speed (which may be automatically determined, as discussed above). If the user input has indicated that the sample particles are fragile, the strength of the ultrasound may be set to a low level. The software tool may control the light diffraction tool to make a series of measurements before ultrasound is been applied and then apply ultrasound with a suitable initial duration (for example: 30 seconds and 50 % strength). If a consistent reduction in particle size is present, the strength of sonication may be incrementally reduced, and the sample re-characterised to identify a suitable strength for sonication. The particle size and obscuration for each measurement may be automatically determined by the software using the light diffraction instrument.

Following determination of a suitable intensity of sonication, the duration of sonication may be increased incrementally (e.g. by a duration between 10s and 30s, for example 20s) until a suitable duration for ultrasound has been identified. A suitable duration of ultrasound may be defined as when the particle size is stable - primary particles are not being milled, but agglomerates have been broken up. For example, Dv10, Dv50 and Dv90 may change less than a predetermined threshold when the particle size is stable.

The software may direct the user to confirm preliminary conclusions on stability that have been automatically determined by the software. In order to facilitate this, the user may be automatically presented with a preliminary conclusion from the software and plots illustrating trends in Dv10, Dv50 and/or Dv90 with respect to sonication duration, and particle size distributions may be provided corresponding with different durations (from which it may be apparent what is happening to the sample during sonication - e.g. breaking up of agglomerates etc). A benefit of this approach is that the user will be trained to recognise and question trends in the measurement data, thereby improving their expertise quickly.

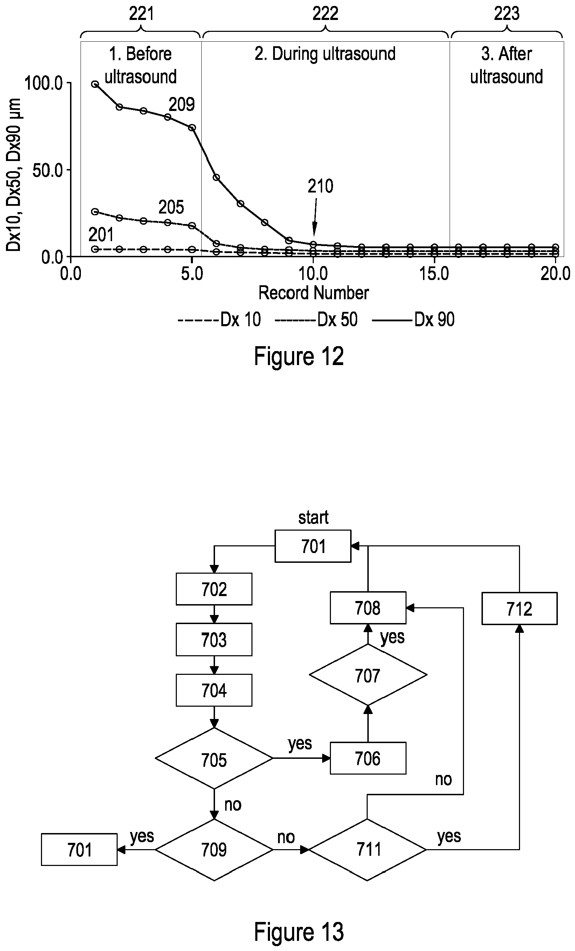

Figure 12 shows a dispersion titration comprising an ultrasound titration. The sample size Dv10 201, Dv50 205 and Dv90 209 is plotted against record number. At each successive record number, an additional amount of agitation has been applied (i.e. successive record numbers comprise an additional increment of stirring duration or sonication duration). In a first stage 221,the sample is dispersed by stirring. The Dv90 sample size 209 is not stable during stirring, indicating that the sample comprises agglomerations that are breaking up as a result of the stirring. During a second stage, sonication is applied, breaking up the larger particles, so that the Dv90 particle size becomes stable (at point 210). The stability of the particle characteristics (e.g. Dv90) may be based on convergence criteria (e.g. the % change between successive measurements is less than a predetermined amount), or based on a threshold gradient. At point 210, it can be seen that the duration of ultrasound is sufficient that the sample has stabilised. The duration of sonication for this measurement may be reported (on a display) and/or stored by the software tool as optimal for the sample . This process may be repeated for a plurality of samples, and a range of optimal sonication durations subsequently selected.

In an alternative approach, an elbow in particle size may be identified as defining an optimal duration of sonication. In this approach a straight line may be defined on a graph plotting sample characteristic (e.g. Dv90) against sonication duration, between the sample characteristic corresponding with minimum sonication duration, and the sample characteristic corresponding with maximum sonication duration. The optimal sonication duration may be defined as the measurement at the maximum distance from the straight line.

An example algorithm defining this approach is set out below:

```
 # Algorithm begins after several measurements have been
 performed at several ultrasound durations
 bin data into sets of ultrasound durations
 calculate mean of d50 for each duration
 for each ultrasound duration:
       d50 line = linear interpolation of d50 using min and max
 duration
       distance = d50measured - d50_line
 optimal ultrasound duration is case with greatest distance
 return optimal ultrasound duration
```

A flow diagram of an example method for ultrasound titration is shown in Figure 13. At step 701, 3 initial measurements are taken without ultrasound. At step 703, ultrasound is applied at a the current ultrasound level for a predetermined period (e.g. a starting level may be defined as 50% power, and each period may be 30 seconds), and the software looks for a stable measurement of low angle scattering (for example, a change less than a threshold amount of change in scattered light intensity at a range of angles of less than 10 degrees between the preceding amount of ultrasound and the current amount of ultrasound). This sonication and measurement is repeated in step 703 until low angle scattering has stabilised (or until a threshold total sonication time is reached). At step 704, the results from the series of sonication durations are analysed to determine at least one particle size (e.g. Dv10, Dv50 and Dv90). Step 705 comprises checking that these particle size results are stable. If the answer at step 705 is "yes", a suitable ultrasound duration and power is selected from the titration (e.g. as discussed above), and the method moves to step 706. At step 706 repeat measurements (e.g. 3) are taken on further sample aliquots to confirm that the selected settings are appropriate. At step 707 the user is prompted as to whether they would like to try a higher sonication power (which may result in a faster measurement time). If the answer is yes, the method increments the sonication power at step 708 and then moves back to step 701, and sonication steps are repeated at higher sonication power (e.g. 100%) power. If the answer at step 705 is "no" the method moves to step 709, at which the software checks for increasing particle size. If the particle size is increasing, the software concludes (at step 710) that the dispersant is unsuitable, and recommends additives or an alternative dispersant. If the particle size is not increasing, the software checks at step 711 for decreasing particle size. If continuously decreasing particle size is found, the software concludes that the sample is milling with ultrasound, and decrements the ultrasound power in step 712 before returning to repeat the measurements from step 701 with lower ultrasound power. If the particle size in step 711 is not found to be continuously decreasing, the software increments the sonication power at step 708 and repeats the measurements from step 701. If 100% sonication power is reached without stable results, the software may recommend external sonication.

### Dry/gas diluent dispersion

A dry (gas phase diluent) may be appropriate for some samples, for example those that are reactive, or which are subject to dissolution.

In order to assist the user achieving reproducible results from a light diffraction particle characterisation, a computer implemented tool (i.e. a software tool) is provided to guide the user through the procedure for developing an appropriate testing methodology for a dry dispersion. The tool may be configured to guide the user through the following (preferably in the order set out below):
1. Correct sampling procedures
2. Identifying a suitable feed rate
3. Identifying a suitable air pressure
4. Comparing results to a well dispersed wet measurement (Optional)
5. Method validation and robustness testing

### Representative sampling

Preparation of the sample before it is added to the system is important. Over half the problems encountered when measuring a sample by laser diffraction are caused by poor sample preparation. The software tool will advise the user on the correct procedure when taking a sample from a container. The advice may comprise:
- When the sample is a powder, large particles tend to rise to the top of the container as smaller ones work their way to the bottom
- If the sample is stored in a container this should be mixed thoroughly before measurement. The container should not be shaken as this often increases the separation of the particles. Instead, the container should be held in both hands and gently rolled and continually changing its orientation for around 20 seconds. This works most effectively with a half-full container
- Another consideration is whether the material, in its dry state, is free flowing. Good pouring characteristics indicate a non-cohesive powder which will usually disperse well in a dry powder feeder without any difficulties, whereas a highly cohesive material tends to stick and clump together, giving biased measurements.
- Remove moisture from a sample by drying it in an oven to overcome sample clumping. However, care should be taken to avoid damaging it. If it is obvious that using an oven is going to damage the sample, use a desiccator.
- A fresh sample that has not had time to absorb moisture from the atmosphere is always preferable and usually gives better results. If hygroscopic samples need to be conveyed to the system over some distances, they should be sealed into pipes as soon as possible with a silica gel bag if this is practicable.

The software tool may display the procedure for good sampling as a video, or an animation. Other alternatives include a series of images outlining the movements to follow for sampling (e.g. to mix a sample stored in a container).

### Feed rate/hopper gap titration

In a dry dispersion, the choice of dispersant is less critical, since wettability is not a criteria. In a dry dispersion, the gas phase dispersant may comprise air, dry nitrogen or another inert gas.

Gas phase dispersion of a particulate sample for particle characterisation by a laser diffraction measurement is typically performed by introducing material from a hopper into a venturi. The sample is fed from the hopper into the venturi by a vibrating sample tray. This approach is not essential, and any sample dispenser can be used to feed sample into a stream of dispersing gas (and subsequently through the sample cell, where the particles scatter light for detection over a range of scattering angles). Alternative sample dispensers include a screw feed based dispenser.

The amount of material passing through the measurement cell is recorded via a laser obscuration measurement. A suitable feed rate may be automatically selected corresponding with an obscuration that is within an appropriate range for most of the measurement duration. For dry dispersions, the amount of obscuration should be below 10 % laser obscuration. Cohesive, fine samples need to be measured at a lower obscuration to maximize the efficiency of the disperser, whereas coarser materials can be measured at a higher obscuration. If poor dispersion is observed for fine, or cohesive, materials then the upper obscuration limit should be reduced to improve the efficiency of the disperser The following target obscuration may be appropriate for different sized materials: fine materials (<10 um): 0.1 - 3% and coarse materials (>100 um): 0.5 - 6 %.

The appropriate obscuration range will depend on the size and nature of the sample. Ideally the measurements should be taken when there is an even flow of powder on the dispenser (e.g. vibrating tray), and when the laser obscuration is consistently within its target range. However, this may be difficult with cohesive powders because, in some cases, cohesive materials do not distribute evenly. Under these circumstances, using a micro tray and reducing the gap between the hopper and the dispenser tray can help. The stability of the sample flow may be optimized by adjusting the set-up of the sample tray and hopper. For free-flowing materials a lower hopper height may prevent material flowing off the tray too quickly. For cohesive materials an increased hopper height may improve flowability. A basket and ball bearing hopper can be used to improve the flow of cohesive materials or material which has clumps.

The software tool may be configured to recommend a basket and ball bearing hopper when the sample is not free flowing, for example when the observed obscuration fluctuates more than a predetermined amount over a predetermined time.

Regardless of the type of sample dispenser, the software may be configured to control the sample dispenser to incrementally increase the feed rate until the sample is in a suitable laser obscuration range (to identify an initial feed rate). The software may be configured to subsequently take a series of measurements, (at 3 different feed rates) +/- 5 % around the initial feed rate identified. This may be automated, and only require the user to follow instructions on when to add sample to the hopper (should that be necessary). Once the software has acquired a series of data, algorithms may be used to work out which settings are most suitable by looking at the overall stability of the data. At this point the identified hopper gap and feed rate will repeated, to ensure they are correct by guiding the user to use 3 sample aliquots.

An example of a suitable algorithm for identifying may comprise finding the lowest standard deviation between subsequent measurements, and selecting the corresponding feed rate as the optimal feed rate (or selecting the combination of feed rate and hopper gap as optimal). Example results from employing the approach are shown below:

**Table 6 - Comparison between feed rate values obtained from expert users and calculated by the algorithm**

| **Sample** | **Expert User** | **Algorithm** |
|---|---|---|
| 0-44µm Glass Beads | 35% | 39% |
| 400-800µm Glass Beads | 20% | 19% |
| Caster Sugar | 35% | 39% |
| Cement | 25-27% | 29% |
| Milk Powder | 35% | 29% |
| Fine Sea Salt | 40% | 39% |

These results show that the algorithm is capable of correctly identifying the best feed rate to use, or it selects an acceptable feed rate that is adjacent to the value chosen by the expert user.

One aspect to note is that several of these measurements were performed for multiple hopper gap values as well as multiple feed rate values. In this titration, the algorithm is capable of extracting these parameters as a pair. The algorithm is capable of correctly identifying the correct hopper gaps where this value had a titration, as shown in Table 7.

**Table 7 - Comparison between hopper gaps obtained from expert users and calculated by the algorithm**

| **Sample** | **Expert User** | **Algorithm** |
|---|---|---|
| Caster Sugar | 1.5mm | 1.5mm |
| Milk Powder | 3.0mm | 3.0mm |

Psuedo-code for an example algorithm is shown below:

```
 # Algorithm begins after several measurements have been
 performed at several feed rates (and possibly several hopper
 gaps)
 bin data into sets of paired feed rates and hopper gaps
 for each pair:
       calculate mean and standard deviation of d10, d50, d90
       calculate gradient of d10, d50 and d90
       if all gradients < 0.01:
              calculate scoring function = sum of all standard
 deviations
 optimal feed rate and hopper gap = minimum of scoring function
 return optimal feed rate and hopper gap
```

In an alternative embodiment, the feed rate may be set automatically in order to achieve a target (or target range) for obscuration (suitable ranges for obscuration are defined above). A closed loop control, for example employing at least one of proportional, integral and differential error feedback may be employed. After each measurement of obscuration, the feed rate may be increased if the obscuration is below the target level, and decreased if the obscuration is above the target level (this example corresponding with proportional error feedback).

In this embodiment, the user may select a desired hopper gap and obscuration, and a feed rate may be automatically selected to achieve that obscuration level.

If the material is a fine material (Dv50 less than 10 um), the target laser obscuration may be set to 1 % and if the material is coarse (Dv50 above 10 um), the target laser obscuration may be set to 3 %. If the user does not know the particle size the active feed rate may set 1 % as the target laser obscuration range. The workflow will first guide and advise users at points where they might need to use a basket and ball bearing hopper. A default hopper gap may be set for initial determination of feed rate (e.g. 2 mm). The active feed rate control will increase the feed rate until the measurements are close to the target laser obscuration. As the measurements are in the obscuration range (e.g. within a predefined tolerance of the target), the software will take measurements until the hopper is empty. Once the measurements are taken the software will analyse the average feed rate demanded and will suggest if the hopper gap needs to be increased or decreased. The software will take the measurements at the different hopper gaps and the algorithms will analyse all the results are suggest the most suitable hopper gap. In this case the most suitable hopper gap will be selected based on the lowest standard deviation between measurements and the minimum absolute gradients between the different settings. At this point the settings are repeated with 3 different aliquots to ensure the identified settings are repeatable

### Air pressure titration

Samples in the dry state are typically dispersed (in light diffraction instruments) using a venturi driven by compressed air. The state of dispersion for a dry sample may be assessed by carrying out a pressure titration and comparing the results to a well dispersed wet measurement. A pressure titration generally shows a decrease in particle size with increasing pressure as agglomerates are dispersed. However, the particle size can also decrease due to particle attrition and these two processes can overlap.

A standard venturi makes use of two of the mechanisms available for dry powder dispersion, (a) velocity gradients caused by shear stress and (b) particle-to-particle collisions. For most materials these two mechanisms are sufficient to disperse the sample. However, some highly agglomerated and robust samples may require the use of a high energy venturi which makes use of an additional higher energy dispersion mechanism of particle-to-wall collisions.

The software tool may be configured to recommend to the user when a high energy venturi may be necessary. The measurements necessary to perform the air pressure titration will at least partially automated. The user adds the sample to the hopper, and the software controls the light diffraction instrument and sample dispenser to take the necessary measurements. For example, the software may control the instrument to performed a series of measurements at 4,3,2,1,0.5,0.1 Bar (gauge pressure). The algorithm employed may take into consideration the number of peaks observed in particle size distributions measured by the instrument from the dispersed samples to identify if the sample is not fully dispersed. For example peaks and or shoulders corresponding with large particles (e.g. at low air pressures), may be identified as agglomerates which have not been dispersed. Such peaks and shoulders should decrease or disappear at the higher air pressure. If not, they represent real particles.

The software may need to increase the feed rate at lower air pressure to ensure the measurements are taken within the target laser obscuration. The algorithms developed may use the data captured to identify where the data is stable and has the lowest deviation in the results and look at the trends between the air pressures.

To determine the optimal air pressure for use with each sample, a plurality of measurements can be taken and then binned into different air pressure bins. The air pressure bin with the lowest gradient, and therefore on a size plateau, may be selected as the optimum air pressure was chosen for each sample. The results for this are included below in Table 7.

**Table 7 - Comparison between air pressure values obtained from expert users and calculated by the algorithm**

| **Sample** | **Expert User** | **Algorithm** |
|---|---|---|
| 0-44µm Glass Beads | 2-3 barg | 3.0 barg |
| 400-800µm Glass Beads | 2 barg | 0.5 barg |
| Caster Sugar | 0.1 barg | 0.1 barg |
| Cement | 0.1 barg | 3 barg |
| Milk Powder | 4 barg | 4 barg |
| Fine Sea Salt | 1 barg | 0.1 barg |
| Ground Coffee | 1 barg | 2 barg |

Psuedo-code for an example algorithm is shown below:

```
 # Algorithm begins after several measurements have been
 performed at several air pressures
 # Workflow should include user input to check for expected
 monomodal samples
 bin data into sets of air pressure
 for each air pressure:
       calculate mean and standard deviation of d10, d50, d90
       if sample is monomodal:
              calculate mean psd
              calculate number of maxima in psd
              if number of maxima > 1:
                      ignore this air pressure value
       calculate gradient of d10, d50 and d90
       if all gradients < 0.01:
              calculate scoring function = sum of all standard
 deviations
 optimal air pressure = minimum of scoring function
 return optimal air pressure
```

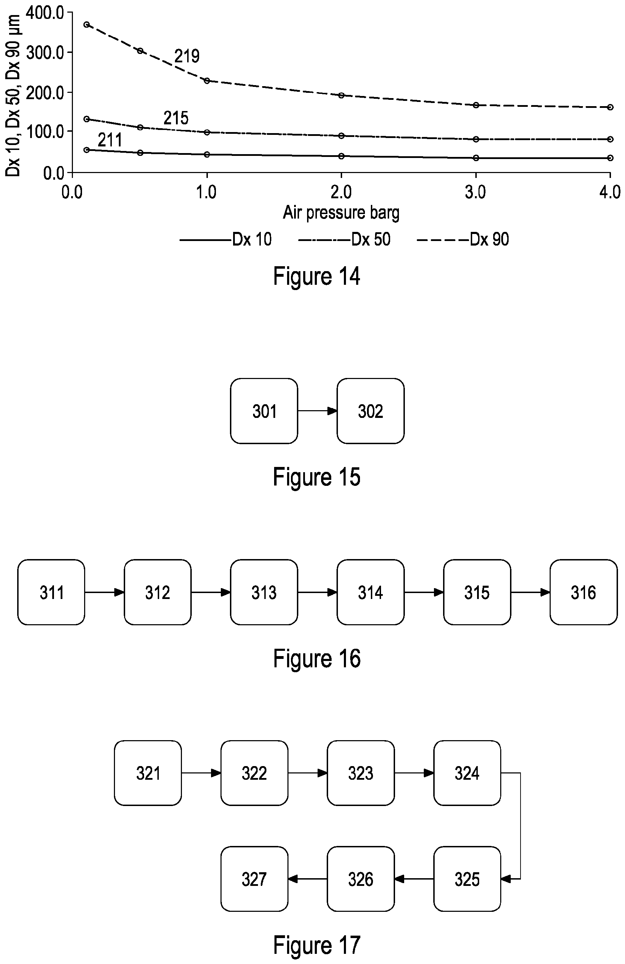

Figure 14 shows example air pressure titration data, showing values for Dv10 211, Dv50 215 and Dv90 219 with increasing air pressure. In this case, higher air pressures are associated with more stable results.

Although reference is made to air pressure, any suitable gas may be used as a diluent in a dry dispersion.

### Comparison of dry dispersion results with wet dispersion results

This will be optional, as not all users will have access to wet measurement data. To ensure the settings selected or recommended by the software tool are reasonable a final test method for analysis of a dry dispersion should be compared to a result from a properly dispersed wet sample (of the same material). This is not always possible but is highly recommended as this ensures the particles have been dispersed correctly and not milled. The user would input a well dispersed wet sample measurement into the user interface, and the software may compare this automatically with results obtained from an air pressure titration. The software may compare the results directly and suggest the most suitable air pressure which can then be transferred to the final operating procedure that is recommended for characterising the particular sample type. Dry dispersion measurements can be expected to be slightly different to wet measurements, therefore it may be necessary to set a percentage similarity threshold. If the difference is above the threshold the workflow will be able to suggest possible route causes and ways, the user could improve the results.

A comparison of dry dispersions performed at different air pressures can be made with a wet dispersion measurement. The air pressure with the most similar results to the wet dispersion measurement may be selected as optimal. In the case where all the measurements obtained from a dry dispersion indicate a smaller particle size (e.g. Dv50) than the wet dispersion, the software may indicate to the user that the sample is too fragile for dry dispersion. In the case where all the measurements obtained from a dry dispersion indicate a larger particle size (e.g. Dv50) than the wet dispersion, the software may indicate to the user that the sample has not been completely dispersed, and recommend the use of a high energy venturi or a wet dispersion.

### Method validation and robustness testing

The settings determined or recommended by the software tool as outlined above may be fine-tuned and/or further validated by using repeat measurements. The amount of sample used in the measurement can affect the variability of results, as it can become another sampling step. For example, as the sample tray vibrates it is possible for a sample to become segregated. The larger, freer flowing, particles within a sample may arrive at the measurement cell before the finer more cohesive particles. Therefore, it is important, (at least when making dry measurement), to ensure that the entire sub sample put onto the tray is measured. During the method development process, it is useful to make repeat measurements of shorter duration to help optimize parameters. However, once the measurement conditions have been defined a long measurement, with sufficient duration to measure all the material on the tray, should be set. The mass of the sample required to achieve reproducible results will depend on the size and polydispersity of the sample. Samples containing larger particles or with very polydisperse distributions will require a larger mass of material to be measured. Therefore, to ensure the method is reproducible multiple measurements may be made using different masses of the sample. In this case the software will guide the user to add different quantities of the sample to the hopper. The software will take the maximum number of measurements it can before all the sample has finished. The software will then analyse the results and identify what mass of sample gives the most repeatable and stable data.

The optimal measurement parameters gathered from the series of titrations (for wet or dry dispersions) may be validated by carrying out multiple repeats and ensuring the results are similar. To assess if the parameters are valid a series of repeats will be carried out using different aliquots of the same sample. For method validation the minimum number of measurements the software may recommend three aliquots, but the user may be able to select a larger value. The measurements carried out may be automated (only requiring sample addition to hopper). After the repeat measurements have been performed the software will assess if all the measurements are similar and within the ISO standards for repeatability (or otherwise defined standards for the measurement provided by the user).

The software may also be able to automatically determine the sensitivity of the measurement repeatability with respect to a particular measurement parameter. For example, a measurement parameter may be varied from the optimal value or range until the measurements are no longer sufficiently repeatable to be within specification for the measurement. The amount of deviation required to cause the measurement to vary may be noted or stored, which will indicate how sensitive the measurement is to that parameter. In another approach, measurement parameters may be varied by a fixed amount (e.g. 10%), and the most sensitive parameters identified as those that cause the measurements to vary by the largest amount.

Once the method validation has been carried out and each measurement parameter has been assessed to see if they are suitable, the settings may be transferred to a format which can be saved by the user as a standard operating procedure. Such a standard operating procedure may enable at least partially automated repeat measurements with the identified measurement parameters. For example, the method parameters may be saved to file on a non-volatile machine readable medium. The file may comprise instructions for configuring a laser diffraction instrument to perform the optimal method for analysing the sample, and provide guidance to a user for any steps that they are required to perform.

An exemplary workflow for determining optimal measurement parameters for a light diffraction analysis is shown in Figure 15. In step 301 a plurality of measurement results are received by a processor. The measurements are obtained by laser diffraction analysis of a particulate sample, and comprise measurements obtained using different measurement parameters (for example, sample preparation may differ between measurements, the sample concentration may differ, an amount of agitation applied to the dispersion comprising particulate sample and diluent may differ - any of the measurement parameters discussed above may vary between measurements). In step 302, the processor analyses the measurements to determine an optimal range of at least one measurement parameter for performing particle characterisation on that sample material by laser diffraction. Step 302 may employ any of the methods and algorithms described herein.

A further exemplary workflow for determining optimal measurement parameters for laser diffraction analysis, performed on a wet dispersion, is shown in Figure 16.

At step 311 the user inputs information about a sample to be analysed by laser diffraction to a graphical user interface of a computer. The information is provided to a software tool for automatically determining at least one optimal measurement parameter (or an optimal range for the measurement parameter) for performing a laser diffraction analysis. The information provided by the user may comprise at least some of the information shown in Table 1 and discussed above.

At step 312, the software tool provides appropriate advice for the user in relation to sample preparation. The advice may be determined in dependence in the information provided by the user in step 311. The sample preparation advice may comprise information and guidance discussed in the sections above entitled "Representative sampling" and "Sample preparation".

At step 313, the software tool at least partially automatically assesses the stability of a dispersion comprising the sample. The software tool may prompt the user to add the sample to a dispersion unit of a laser diffraction instrument, and the software tool may automatically assess the stability of the dispersion - for example, as set out in the section entitled "Stability assessment".

At step 314, the software tool at least partially automatically determines at least one optimal value for a measurement parameter (or an optimal range of values for at least one measurement parameter) for laser diffraction analysis. Examples of measurement parameters are agitation parameters (including stirrer speed and ultrasound sonication intensity and duration), and obscuration (i.e. sample concentration). The approach for determining the measurement parameter values may comprise at least some of the features described in the sections above entitled "Stirrer speed titration", "Obscuration titration" and "Ultrasound titration".

At step 315, the software tool at least partially automatically assesses the stability and robustness of laser diffraction measurements performed using the selected (optimal) measurement parameters. The approach for assessment of stability and robustness of the method may comprise at least some of the features described in the section above entitled "Method validation and robustness testing".

At step 316, the software tool may transfer the method to a format that can be saved by the user as a standard operating procedure, as discussed in the section entitled "Method validation and robustness testing".

A further exemplary workflow for determining optimal measurement parameters for laser diffraction analysis, performed on a dry dispersion, is shown in Figure 17.

At step 321 the user inputs information about a sample to be analysed by laser diffraction to a graphical user interface of a computer. The information is provided to a software tool for automatically determining at least one optimal measurement parameter (or an optimal range for the measurement parameter) for performing a laser diffraction analysis. The information provided by the user may comprise at least some of the information shown in Table 1 and discussed above.

At step 322, the software tool provides appropriate advice for the user in relation to sample preparation. The advice may be determined in dependence in the information provided by the user in step 311. The sample preparation advice may comprise information and guidance discussed in the sections above entitled "Representative sampling" and "Sample preparation".

At step 323, the user is guided by the software tool to establish a steady flow sample into a gas phase dispersant. The software tool may at least partially automate the determination of appropriate of measurement parameters (such as feed rate and/or hopper gap). The software tool may employ at least some of the features set out in the section entitled "Feed rate/hopper gap titration".

At step 324, the software tool at least partially automatically determines at least one optimal measurement parameter (or an optimal range for at least one measurement parameter) for laser diffraction analysis. An example of a measurement parameter that may be determined in this step is air pressure. The approach for determining the measurement parameter may comprise at least some of the features described in the section above entitled "Air pressure titration".

At (optional) step 325, the software tool at least partially automatically compares the measurement result obtained using optimal measurement parameters with a measurement obtained from the same sample in a wet dispersion. This step may include at least some of the features described in the section .above entitled "Comparison of dry dispersion results with wet dispersion results".

At step 326, the software tool at least partially automatically assesses the stability and robustness of laser diffraction measurements performed using the selected measurement parameters. The approach for assessment of stability and robustness of the method may comprise at least some of the features described in the section above entitled "Method validation and robustness testing"

At step 327, the software tool may transfer the method to a format that can be saved by the user as a standard operating procedure, as discussed in the section entitled "Method validation and robustness testing".

Although examples have been described above, these are not intended to limit the scope of the invention, which should be determined with reference to the appended claims. Algorithm features that are applied to determine optimal measurement parameters of a particular type may be equally applicable to determine optimal measurement parameters of a different type.

## Claims

1. A method of automatically selecting an optimal value or range for at least one measurement parameter for particle characterisation by laser diffraction, comprising:
receiving a plurality of measurements and associated measurement parameters, wherein the measurements are performed on at least one particulate sample by using laser diffraction to determine at least one particle characteristic, wherein the plurality of measurements were obtained using a plurality of values for the at least one measurement parameter;
using a processor to automatically select, based on the at least one particle characteristic and the associated measurement parameters, an optimal value or range of at least one measurement parameter for performing particle characterisation by laser diffraction.

2. The method of claim 1, further comprising performing the measurements by illuminating the sample with a light beam from a light source, thereby generating scattered light from the interaction of the light beam with particles of the sample; detecting a distribution of the scattered light intensity over a range of different scattering angles; using a processor to determine a particle characteristic from the distribution of the scattered light intensity over the range of different scattering angles.

3. The method of claim 1 or 2, wherein automatically selecting an optimal range of at least one measurement parameter comprises identifying a value or range of a measurement parameter that results in a stable particle characteristic.

4. The method of claim 3, comprising binning the measurements into a plurality of bins corresponding with different values of a measurement parameter, determining a gradient or variance between the at least one particle characteristic of each measurement parameter bin, and selecting a range of optimal values of the measurement parameter based on the gradient or variance of each measurement parameter bin.

5. The method of claim 4, wherein binning the measurements comprises using a clustering algorithm.

6. The method of claim 4 or 5, wherein selecting a range of optimal values of a measurement parameter comprises:
identifying an bin with minimum gradient or variance;
identifying bins that have a gradient or variance below a threshold defined as a multiple of the minimum gradient or variance.

7. The method of any preceding claim, wherein the at least one measurement parameter is selected from: obscuration, agitation amount, stirrer speed, sonication intensity, sonication duration, feed rate, hopper gap, gas dispersant pressure, measurement time and sample mass.

8. The method of any preceding claim, wherein:
the at least one particle characteristic comprises a particle size and the at least one measurement parameter comprises obscuration; and
the method comprises constraining an optimal value or range of obscurations based on the measured particle size.

9. The method of any preceding claim, wherein the method comprises:
prompting a user to provide an estimated particle density;
the at least one measurement parameter comprises an agitation amount, and the method comprises limiting a value or range determined as the optimum agitation amount to below a threshold value in response to the estimated particle density being above a threshold value.

10. A non-volatile machine readable medium for configuring a processor to:
receive a plurality of measurements and associated measurement parameters, wherein the measurements are performed on at least one particulate sample by using laser diffraction to determine at least one particle characteristic, wherein the plurality of measurements were obtained using a plurality of values for the at least one measurement parameter;
automatically select, based on the at least one particle characteristic and the associated measurement parameters, an optimal value or range of at least one measurement parameter for performing particle characterisation by laser diffraction

11. A laser diffraction instrument, comprising:
a sample cell;
a light source configured to illuminate the sample cell with a light beam, thereby generating scattered light from the interaction of the light beam with particles within the sample cell;
a plurality of light detectors configured to detect a distribution of the scattered light intensity over a range of different scattering angles;
a processor configured to determine a particle characteristic from the distribution of scattered light intensity over the range of different scattering angles;
wherein the processor is further configured to:
receive a plurality of measurements and associated measurement parameters, wherein the measurements are performed on at least one particulate sample by using laser diffraction to determine at least one particle characteristic, wherein the plurality of measurements were obtained using a plurality of values for the at least one measurement parameter;
automatically select, based on the at least one particle characteristic and the associated measurement parameters, an optimal range or value of at least one measurement parameter for performing particle characterisation by laser diffraction.

12. The laser diffraction instrument of claim 11, wherein the processor is configured to obtain at least some of the plurality of measurements by successively varying the at least one measurement parameter and performing a laser diffraction analysis for each value of the at least one measurement parameter.

13. The laser diffraction instrument of claim 11 or 12, further comprising a display, wherein the processor is configured to use the display to guide a user through a set of measurements for providing at least some of the plurality of measurements and associated measurement parameters.

14. The laser diffraction instrument of any of claims 11 to 13, wherein the laser diffraction instrument comprises a particle dispersion unit, the measurement parameters comprise particle dispersion unit settings, and the processor is configured to automatically control the particle dispersion unit using the particle dispersion unit settings.

15. The laser diffraction instrument of any of claims 11 to 14, wherein the processor is configured to perform the method according to any of claims 1 to 10.
